# EUROPEAN PATENT APPLICATION

(11) **EP 2 645 228 A2**
(43) Date of publication of application: **02.10.2013**
(21) Application number: 13156840.4
(22) Date of filing: 26.02.2013
(51) Int. Cl.: G06F 3/12

(54) **Printing condition setting apparatus, printing conditon setting method, and non-transitory storage medium**

(30) Priority: 30.03.2012 JP 2012081659
(71) Applicant: Fujifilm Corporation, Minato-ku Tokyo 106-8620 (JP)
(72) Inventor: Shimizu, Ryo, Tokyo, 107-0052 (JP)
(74) Representative: Klunker . Schmitt-Nilson . Hirsch

(57) **Abstract**

Details of medium condition items, which are condition items concerning a medium for transferring the color materials, are grouped according to predetermined collection rules, and group attributes are allocated to printing conditions. Color conversion condition items, which are condition items concerning color conversion conditions for the printing process, are set or canceled altogether with respect to a plurality of printing conditions having allocated group attributes.

## Description

### BACKGROUND OF THE INVENTION

### Field of the Invention:

The present invention relates to a printing condition setting apparatus, a printing condition setting method, and a non-transitory storage medium for setting printing conditions, which represent a combination of at least two condition items with respect to a printing process for transferring color materials to an output medium. Description of the Related Art:

Recently, widespread use of DTP (Desktop Publishing) and CTP (Computer to Plate) technologies has prompted the digitalization of printing process workflow. For example, if a printing company finds an order newly placed by a production company, which is similar to an order placed in the past, it is convenient for the printing company to employ a printing condition that was used for the past order and to carry out a printing job according to the printing condition. Such a printing condition refers to a composite printing condition representing a combination of two or more condition items concerning printing. Various user interfaces have been proposed in the art, which enable a user to determine a printing condition from a plurality of selectable printing conditions based on search operations performed by the user.

Japanese Laid-Open Patent Publication No. 2004-206553 discloses a method and software for retrieving certain condition items from among a given list of condition items, and displaying a setting screen depending on the retrieved condition items. More specifically, the publication discloses that setting areas for a plurality of selected condition items are collected and displayed on one setting screen.

### SUMMARY OF THE INVENTION

For example, if a printing company introduces new brands of paper, an operator is required to newly generate and set printing conditions for each of the brands of paper. Sheets of paper and printing plates as supplies or consumables have already been available in a vast number of brands and types, and the number of such supplies is expected to keep growing in the future. In such a situation, the operator will find it highly tedious and time-consuming to set printing conditions for each of the brands and types of supplies.

It is an object of the present invention to provide a printing condition setting apparatus, a printing condition setting method, and a non-transitory storage medium, which are capable of easily setting color conversion conditions for a vast number of printing conditions.

According to the present invention, there is provided a printing condition setting apparatus for setting printing conditions representing a combination of at least two condition items with respect to a printing process for transferring color materials to an output medium, comprising a group attribute allocator for grouping details of medium condition items, which are condition items concerning a medium for transferring the color materials, according to predetermined collection rules, and allocating group attributes to the printing conditions, and a condition setter for setting or canceling altogether color conversion condition items, which are condition items concerning color conversion conditions for the printing process, with respect to a plurality of the printing conditions having the group attributes allocated by the group attribute allocator.

As described above, the printing condition setting apparatus includes the group attribute allocator that groups details of medium condition items, which are condition items concerning a medium for transferring the color materials, according to predetermined collection rules, and allocates group attributes to the printing conditions, and the condition setter that sets or cancels altogether color conversion condition items, which are condition items concerning color conversion conditions for the printing process, with respect to a plurality of printing conditions having group attributes allocated by the group attribute allocator. Consequently, it is possible to efficiently associate medium condition items and color conversion condition items with each other, thereby allowing color conversion conditions to easily be set with a vast number of printing conditions.

The predetermined collection rules preferably comprise rules concerning similarity of color reproduction characteristics in the printing process. If transfer mediums have the same group attribute, then substantially equal color reproduction characteristics can be achieved on prints.

The medium for transferring the color materials may comprise the output medium, and the group attribute allocator may group the details of the medium condition items according to a type of the output medium, and allocate the group attributes to the printing conditions.

The printing condition setting apparatus preferably further comprises a color information acquirer for acquiring color information of the output medium, and the group attribute allocator preferably allocates the group attributes to the printing conditions based on the color information acquired by the color information acquirer.

The medium for transferring the color materials may comprise a printing plate, and the group attribute allocator may group the details of the medium condition items according to a type of halftone dots formed on the printing plate, and allocate the group attributes to the printing conditions.

The color conversion condition items may include at least one of a target profile, a printing profile, a device link profile, and a dot gain curve.

According to the present invention, there also is provided a printing condition setting method to be carried out by a printing condition setting apparatus for setting printing conditions representing a combination of at least two condition items with respect to a printing process for transferring color materials to an output medium, comprising grouping details of medium condition items, which are condition items concerning a medium for transferring the color materials, according to predetermined collection rules, and allocating group attributes to the printing conditions, and setting or canceling altogether color conversion condition items, which are condition items concerning color conversion conditions for the printing process, with respect to a plurality of the printing conditions having the allocated group attributes.

According to the present invention, there is further provided a non-transitory storage medium storing therein a program for setting printing conditions representing a combination of at least two condition items with respect to a printing process for transferring color materials to an output medium, the program enabling a computer to perform the steps of grouping details of medium condition items, which are condition items concerning a medium for transferring the color materials, according to predetermined collection rules, and allocating group attributes to the printing conditions, and setting or canceling altogether color conversion condition items, which are condition items concerning color conversion conditions for the printing process, with respect to a plurality of the printing conditions having the allocated group attributes.

With the printing condition setting apparatus, the printing condition setting method, and the non-transitory storage medium according to the present invention, details of medium condition items, which are condition items concerning a medium for transferring the color materials, are grouped according to predetermined collection rules, and group attributes are allocated to printing conditions. Color conversion condition items, which are condition items concerning color conversion conditions for the printing process, are set or canceled altogether with respect to a plurality of printing conditions having allocated group attributes. Consequently, it is possible to efficiently associate medium condition items and color conversion condition items with each other, thereby allowing color conversion conditions to easily be set with a vast number of printing conditions.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a block diagram of a print production system incorporating therein a RIP apparatus, which serves as a printing condition setting apparatus according to an embodiment of the present invention;
FIG. 2 is an electric block diagram of the RIP apparatus shown in FIG. 1;
FIG. 3 is a flowchart of an operation sequence of the RIP apparatus shown in FIGS. 1 and 2;
FIG. 4 is a diagram showing a list table, which represents a printing condition database;
FIG. 5 is a view of an image showing an example of a registering screen;
FIG. 6 is a view of a first image showing an example of a setting screen;
FIG. 7 is a view of a second image showing an example of a setting screen;
FIG. 8 is a view of a third image showing an example of a setting screen;
FIG. 9 is a view of a fourth image showing an example of a setting screen;
FIG. 10 is a view of an image showing a setting screen after color conversion conditions have been set; and
FIG. 11 is a diagram illustrating another process of allocating group attributes.

### DESCRIPTION OF THE PREFERRED EMBODIMENTS

A printing condition setting method according to a preferred embodiment of the present invention in relation to a printing condition setting apparatus, a non-transitory storage medium, and a print production system for carrying out the printing condition setting method will be described in detail below with reference to the accompanying drawings.

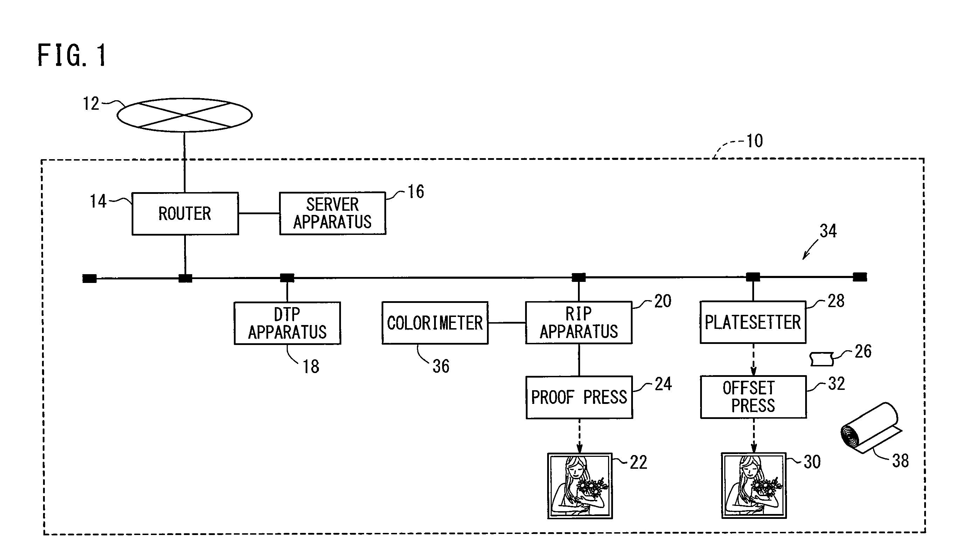

FIG. 1 shows in block form a print production system 10 incorporating therein a RIP (Raster Image Processing) apparatus 20 as a printing condition setting apparatus according to an embodiment of the present invention.

As shown in FIG. 1, the print production system 10 includes a router 14, which serves as a device by which the print production system 10 is connected to a network 12, a server apparatus 16, which is accessible through the network 12 from each of respective terminal units (not shown) belonging to an external network, a DTP apparatus 18 for performing DTP (Desktop Publishing) processes including a process for editing content data acquired from the server apparatus 16, the RIP apparatus 20 for performing various image processing routines including a rasterizing process and a color conversion process on proof data or platemaking data generated by the DTP apparatus 18, a proof press 24 for printing a proof print 22 based on processed proof data from the RIP apparatus 20, a platesetter 28 for producing printing plates 26 based on proof data from the RIP apparatus 20, and an offset press 32 with the printing plates 26 mounted thereon for printing a print 30.

The server apparatus 16 is a core device for handling workflow management in the print production system 10. The server apparatus 16 is connected to each of respective terminal units of at least one of a designer and a production company (not shown) for communicating with the terminal units through the router 14 and the network 12. The server apparatus 16 also is connected to the DTP apparatus 18, the RIP apparatus 20, and the platesetter 28 for communicating therewith through a LAN (Local Area Network) 34 arranged in the print production system 10.

The server apparatus 16 functions as a file server for storing and transferring various files. The server apparatus 16 also functions as an authority management server for managing task authorities that are executable by terminal units, users, or print jobs, and as a mail server for generating and distributing notice mails at given times, such as the beginning and end times of respective processes. Various data files that can be managed by the file server include, for example, files of content data, proof data, platemaking data, job tickets (for example, JDF (Job Definition Format) files), ICC (International Color Consortium) profiles, color sample data, and history information of printing conditions used in the past (hereinafter referred to as a printing condition database).

The DTP apparatus 18 generates edited data per page from content data representing characters, figures, patterns, pictures, etc., after the content data have been processed by a preflight process. The DTP apparatus 18 also performs an imposing process according to a designated binding process and a designated page folding process, by referring to tag information of a job ticket.

The RIP apparatus 20 functions as a print processing server for at least one printing press. In FIG. 1, the RIP apparatus 20 is connected to the proof press 24 and the platesetter 28 for communication therewith. The RIP apparatus 20 performs a rasterizing process on proof data (including proofread data) expressed in a PDL (Page Description Language) in order to produce print data suitable for printing presses. The RIP apparatus 20 also supplies the print data to the proof press 24 or the platesetter 28. The rasterizing process includes a data format conversion process for converting a PDL format into a raster format, and a color matching process using an ICC profile.

A colorimeter 36 is connected to the RIP apparatus 20. The colorimeter 36 acquires color values from an object to be measured in response to given colorimetric operations performed thereon. The color values include not only device-independent data, such as tristimulus values X, Y, Z, coordinate values L*, a*, b* of a uniform color space, or the like, but also a distribution of optical physical quantities with respect to wavelengths (hereinafter referred to as "spectral data"). The spectral data may be a spectral radiation distribution, a spectral sensitivity distribution, a spectral reflectance, or a spectral transmittance.

The proof press 24 prints a proof print 22 based on print data supplied from the RIP apparatus 20. The proof press 24 may comprise a DDCP (Direct Digital Color Proofer), an ink jet color proofer, a low-resolution color laser printer (electrophotographic printer), an ink jet printer, or the like.

The offset press 32 produces a print 30 by applying inks (color materials) to a sheet 38 (output medium) through printing plates 26, which serve as transfer mediums, and other intermediate transfer members, not shown. The offset press 32 may be replaced with a digital printing press for carrying out direct printing. Such a digital printing press may comprise an ink jet color proofer, a color laser printer (electrophotographic printer), or the like. These types of printing presses share features in common, in that they all produce prints by transferring color materials to output mediums.

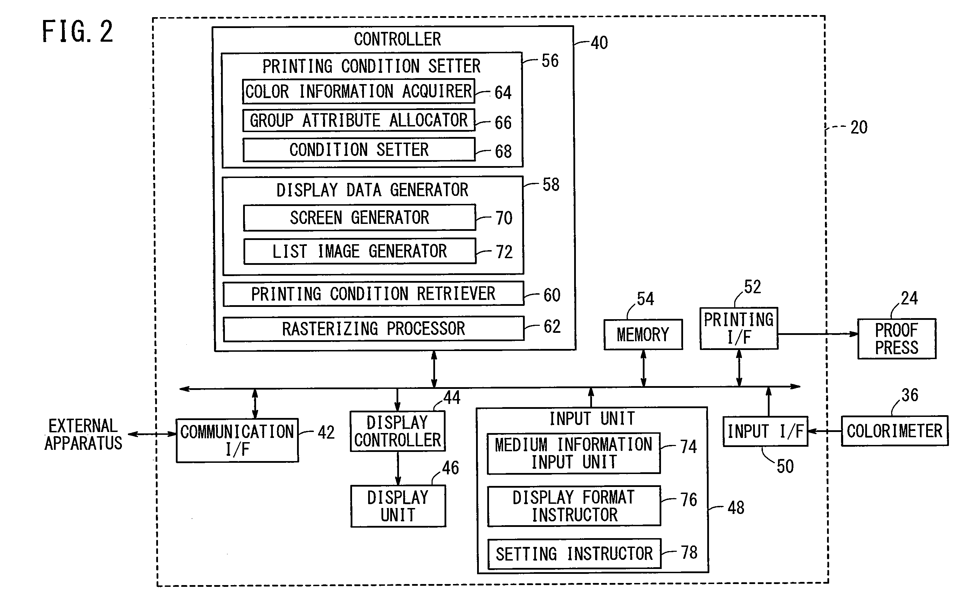

FIG. 2 is an electric block diagram of the RIP apparatus 20 shown in FIG. 1.

As shown in FIG. 2, the RIP apparatus 20 includes a controller 40, a communication I/F 42, a display controller 44, a display unit 46, an input unit 48, an input I/F 50, a printing I/F 52, and a memory 54 (non-transitory storage medium).

The communication I/F 42 is an interface for sending electric signals to and receiving electric signals from external apparatus. For example, the communication I/F 42 can acquire various items of information, such as proof data, platemaking data, a printing condition database, ICC profiles, etc., which are managed and saved in the server apparatus 16 (see FIG. 1).

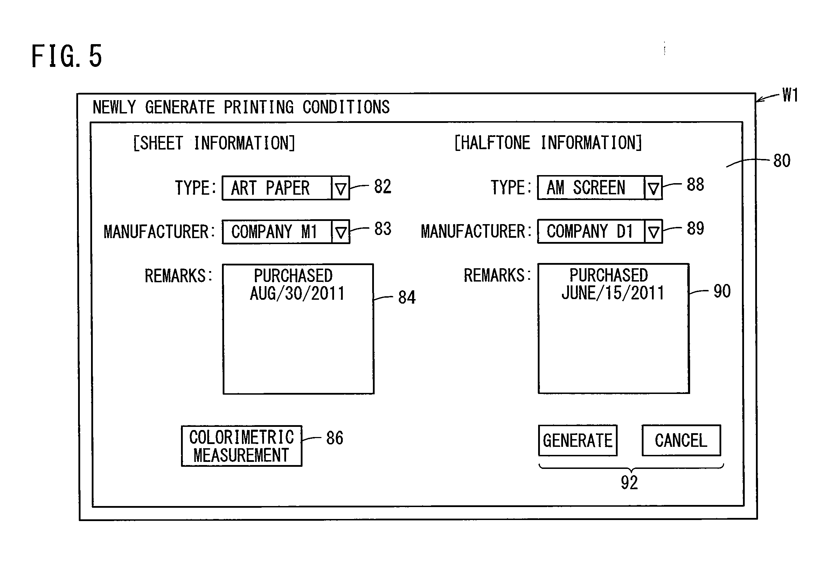

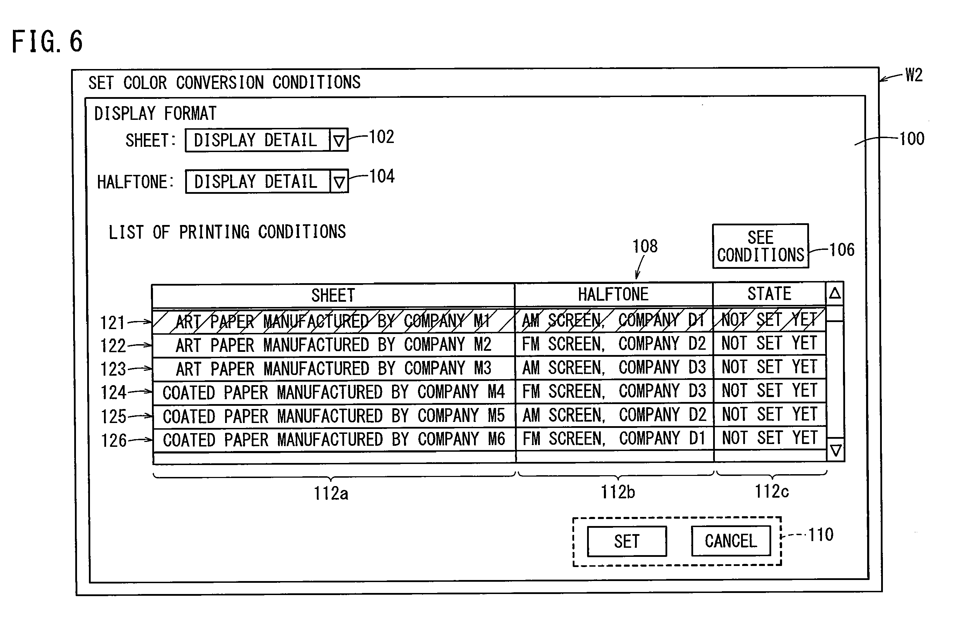

The display controller 44 comprises a control circuit for controlling the display unit 46 under the control of the controller 40. More specifically, the display controller 44 outputs a display control signal to the display unit 46 via an I/F (not shown), and then the display unit 46 is energized and displays various images, including a window W1 (see FIG. 5) and a window W2 (see FIG. 6).

The input I/F 50 is an interface for receiving electric signals representing colorimetric data in order to enable the RIP apparatus 20 to acquire color values of an object to be measured (e.g., sheet 38) through the colorimeter 36.

The printing I/F 52 is an interface for sending electric signals representing printing data to the proof press 24 in order to enable the proof press 24 to print a desired proof print 22.

The memory 54 stores programs and data, which are required for the controller 40 to control various components. The memory 54 may comprise a computer-readable non-transitory storage medium, such as a nonvolatile memory, a hard disk, or the like.

The controller 40 comprises a processor such as a CPU (Central Processing Unit). The controller 40 reads and executes programs stored in the memory 54 to carry out functions of a printing condition setter 56, a display data generator 58, a printing condition retriever 60, and a rasterizing processor 62.

Such programs may be recorded in a computer-readable storage medium, and the programs recorded in the storage medium may be read and run by a computer system. The computer system includes an OS and hardware including a CPU and peripheral devices. The computer-readable storage medium comprises a portable medium such as a flexible disk, a magnetooptic disk, a ROM, a CD-ROM, or the like, or a storage medium such as a hard disk or the like that is incorporated in the computer system. The storage medium may also include a medium for dynamically holding programs for a short period of time, such as a communication line for transmitting programs via a network, such as the Internet or the like or a communication channel such as a telephone line, or a memory for holding programs for a certain period of time such as a volatile memory in a computer system, which serves as a server or a client in a network environment.

The printing condition setter 56 sets condition items for printing conditions, which are suitable for printing jobs. More specifically, the printing condition setter 56 includes a color information acquirer 64 for acquiring color information concerning the sheet 38, a group attribute allocator 66 for allocating a group attribute to printing conditions according to predetermined collection rules, and a condition setter 68 for setting and updating details of the condition items for printing conditions.

The display data generator 58 includes a screen generator 70 for generating a registration screen 80 (see FIG. 5) and a setting screen 100 (see FIG. 6), and a list image generator 72 for generating an image to display a list of printing conditions (hereinafter referred to as a "list image").

The printing condition retriever 60 acquires printing conditions, which are retrieved from the printing condition database. For example, the printing condition retriever 60 sends a query to the server apparatus 16, and acquires at least one printing condition that matches a desired retrieval condition.

The rasterizing processor 62 performs a rasterizing process on proof data (including proofread data). The rasterizing process includes a data format conversion process for converting data from a PDL format into a raster format, and a color matching process using an ICC profile.

The input unit 48 comprises various input devices including a mouse, a trackball, a keyboard, etc. The input unit 48 functions as a medium information input unit 74 for inputting information concerning mediums for transferring color materials (hereinafter referred to as "medium information"), a display format instructor 76 for instructing a display format such as the list image 108, etc. (see FIG. 6, etc.), and a setting instructor 78 for instructing various settings for printing conditions.

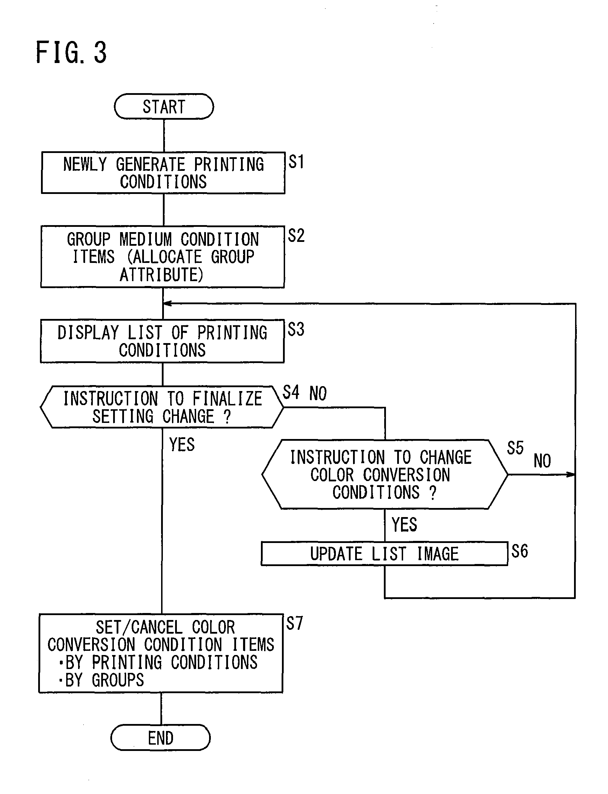

The RIP apparatus 20, which serves as a printing condition setting apparatus according to the present embodiment, is constructed as described above. Next, operations of the RIP apparatus 20 will be described in detail below with reference to the flowchart of FIG. 3.

Prior to describing operations of the RIP apparatus 20, the printing condition database will first be described below. In the description and claims of the present application, it should be noted that the term "printing condition" implies a composite condition, representative of a combination of two or more condition items concerning printing.

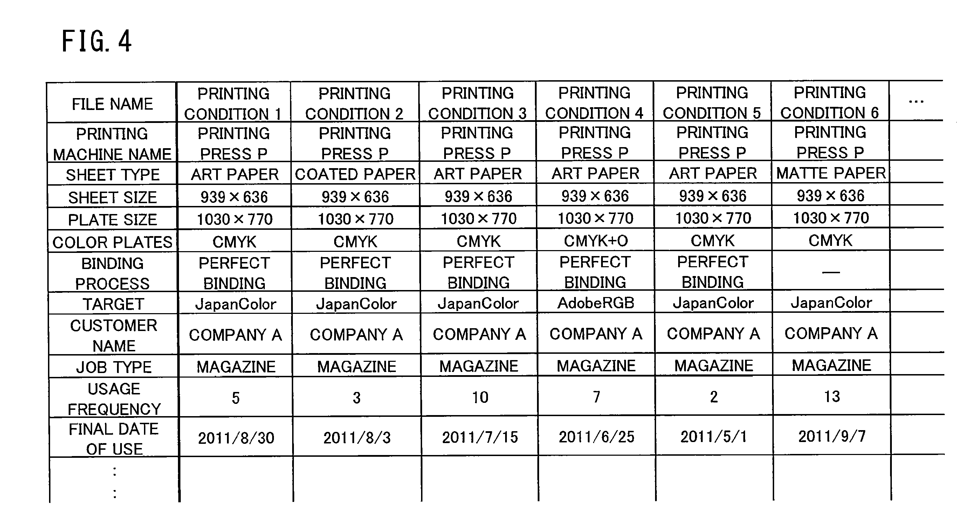

FIG. 4 is a diagram showing a list table, which represents a printing condition database. It is assumed that the printing condition database stores a plurality of printing conditions, each of which is in a file format. As shown in FIG. 4, the printing condition database stores files having the file names "PRINTING CONDITION 1" through "PRINTING CONDITION 6" (file extensions are omitted from illustration), each of which is associated with two or more condition items. In FIG. 4, such condition items include, under each file name, a printing press name, a sheet type, a sheet size, a plate size, color plates, a binding process, a target (target profile type), a customer name, a job type, a usage frequency, and a final date of use. The condition items may include not only data that is involved directly in a printing process, such as a printing press name, color plates, a profile, etc., but also data (so-called metadata) ancillary to such data.

Condition items concerning color conversion conditions for a printing process may be referred to as "color conversion condition items". Such color conversion condition items include profiles (e.g., a target profile, a printing profile, and a device link profile), a color conversion table (e.g., a dot gain curve), color plates, etc.

Condition items concerning mediums for transferring color materials may be referred to as "medium condition items". Such medium condition items include a type, a manufacturer, a brand, a product name, a lot number, a size, etc., of the sheet 38. For an offset printing process, which requires the printing plates 26, the medium condition items also include, for example, a manufacturer, a product name, a lot number, a size, a halftone dot type, etc., of the printing plates 26.

In step S1 of FIG. 3, the printing condition setter 56 inputs to the RIP apparatus 20 various items of information concerning printing conditions, which are to be newly generated and registered in response to actions made by the operator or user (referred to as a "registrant" in step S1).

In response to an instruction to start a screen generating process, the screen generator 70 generates display data for the registration screen 80, and supplies the generated display data to the display controller 44. The display controller 44 then displays a window W1 (including the registration screen 80) on the display unit 46.

As shown in FIG. 5, the registration screen 80 includes two pull-down menus 82, 83, a text box 84, and a button 86 labeled "COLORIMETRIC MEASUREMENT", which are arranged successively in a downward direction from above in a left column, and two pull-down menus 88, 89, a text box 90, and a button group 92, which are arranged successively in a downward direction from above in a right column. The pull-down menus 82, 83, 88, 89 and the text boxes 84, 90 function collectively as the medium information input unit 74 (see FIG. 2). The button group 92 functions as the setting instructor 78 (see FIG. 2).

The registrant enters at least one condition item through the registration screen 80. It is assumed that, in response to actions made by the registrant, "ART PAPER" (pull-down menu 82) is entered as the type of sheet 38, "M1 COMPANY" (pull-down menu 83) is entered as the manufacturer of the sheet 38, "AM HALFTONE" (pull-down menu 88) is entered as the halftone type formed on the printing plates 26, "D1 COMPANY" (pull-down menu 89) is entered as the manufacturer of the printing plates 26, as well as other remarks (text boxes 84, 90).

In response to clicking on the button groups 92 ("GENERATE" button), the printing condition setter 56 generates new printing conditions with the entered details set in the medium condition items concerning the sheet 38 or the printing plates 26. The RIP apparatus 20 then sends the generated printing conditions through the communication I/F 42 to the server apparatus 16. The printing conditions, which have been sent in this manner, are added and registered in the printing condition database established in the server apparatus 16. At the time of registering the printing conditions, it is assumed that nothing has been set in relation to the color conversion condition items.

The operator, who may be identical to or different from the registrant, acquires printing conditions from the printing condition database, which are suitable for a printing job to be carried out. In response to an action made by the operator using the input unit 48, the printing condition retriever 60 acquires a plurality of printing conditions that match the entered retrieval condition.

In step S2, the group attribute allocator 66 allocates a group attribute to given printing conditions. More specifically, the group attribute allocator 66 groups the content of the medium condition items according to the predetermined collection rules. Although arbitrary conditions may be established as conditions for collecting the predetermined collection rules, the medium condition items may be grouped depending on similarity of color reproduction characteristics used for printing. According to the present embodiment, if the type of sheet 38 remains the same, then the color reproduction characteristics on prints 30 are regarded as similar.

The group attribute allocator 66 allocates a group attribute "ART PAPER" to all printing conditions in which the type of sheet 38 represents "ART PAPER". Similarly, the group attribute allocator 66 allocates a group attribute "COATED PAPER" to all printing conditions in which the type of sheet 38 represents "COATED PAPER".

The group attribute allocator 66 allocates a group attribute "AM SCREEN" to all printing conditions in which the halftone type represents "AM SCREEN". Similarly, the group attribute allocator 66 allocates a group attribute "FM SCREEN" to all printing conditions in which the halftone type halftone represents "FM SCREEN".

In step S3, the display controller 44 displays a list image 108 of printing conditions (see FIG. 6) on the display unit 46. More specifically, the screen generator 70 generates display data for the setting screen 100, and thereafter supplies the generated display data to the display controller 44. The display controller 44 displays a window W2 (including the setting screen 100), which is different from the window W1 on the display unit 46.

As shown in FIG. 6, the setting screen 100 includes two pull-down menus 102, 104, a button 106 labeled "SEE CONDITIONS", a list image 108 showing a list of information concerning a plurality of printing conditions, and a button group 110 in which buttons are arranged successively in a downward direction. The pull-down menus 102, 104 function as the display format instructor 76 (see FIG. 2), and the "SEE CONDITIONS" button 106 and the button group 110 function as the setting instructor 78 (see FIG. 2).

Each of the pull-down menus 102, 104 is capable of selectively entering "DISPLAY DETAIL" and "DISPLAY TYPE". In FIG. 6, "DISPLAY DETAIL" is shown as being entered in both of the pull-down menus 102, 104.

The list image 108 displays different printing conditions in a first line 121, a second line 122, a third line 123, a fourth line 124, a fifth line 125, and a sixth line 126, respectively. Details (attributes) of three types of condition items are displayed for each of the printing conditions. More specifically, the list image 108 has three small fields, i.e., a small field 112a representing the sheet 38, a small field 112b representing a halftone formed on the printing plates 26, and a small field 112c representing a condition as to whether color conversion conditions have been set or not. In FIG. 6, the first line 121 (shown in hatching) is highlighted as a result of being clicked on by the operator, thereby indicating that the first one of the six printing conditions is currently selected.

Even if different sheets 38 are manufactured by different manufacturers and have different product names, essentially the same color reproduction characteristics may be achieved on prints 30 provided that the different sheets 38 are of the same type. In this case, it is necessary for the operator to set the same color conversion conditions for the different sheets 38. The printing condition setting method according to the present embodiment allows color conversion conditions to be set or canceled efficiently altogether for each of the group attributes.

Specific details in relation to the color conversion conditions will be described below.

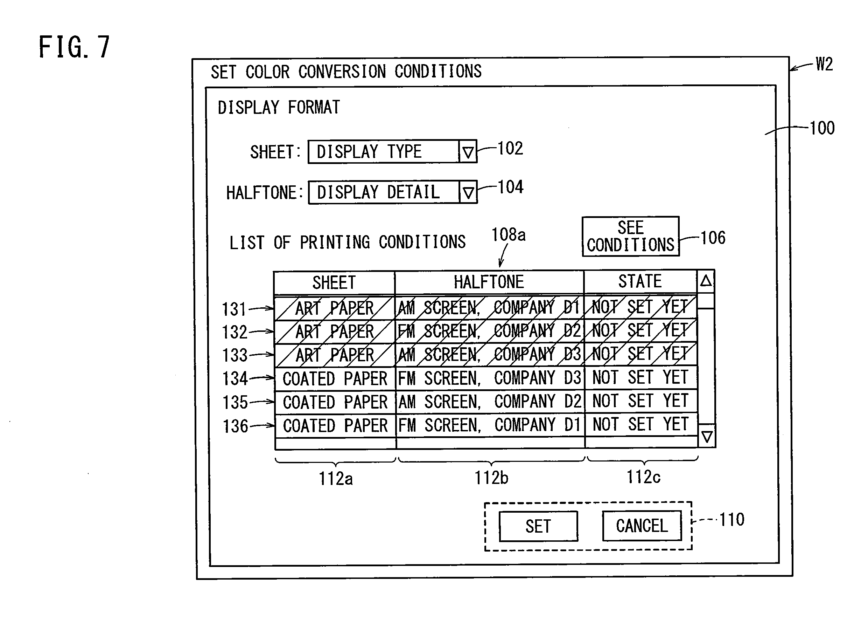

The operator selects the pull-down menu 102 and changes from "DISPLAY DETAIL" to "DISPLAY TYPE", and accordingly the list image generator 72 generates a new list image 108a (see FIG. 7) by referring to the group attribute allocated in step S2. More specifically, the list image generator 72 changes a portion of the details of the small field 112a of the list image 108 (see FIG. 6). The screen generator 70 then generates display data (including the list image 108a) for the setting screen 100, and supplies the generated image data to the display controller 44.

In response to the change in the pull-down menu 102, the display format of the list image 108 is changed immediately. FIG. 7 shows a setting screen 100 displayed at this time, which includes, in a center portion thereof, a list image 108a, which is displayed instead of the list image 108 shown in FIG. 6. As shown in FIG. 7, the group attribute "ART PAPER" is newly displayed in certain areas, i.e., in a first line 131, a second line 132, and a third line 133 of the small field 112a, and the group attribute "COATED PAPER" is newly displayed in certain areas, i.e., in a fourth line 134, a fifth line 135, and a sixth line 136 of the small field 112a. The operator clicks on an upper region of the small field 112a in the vicinity of the letters "ART PAPER", whereby the operator can select the first line 131, the second line 132, and the third line 133, which are shown together in hatching.

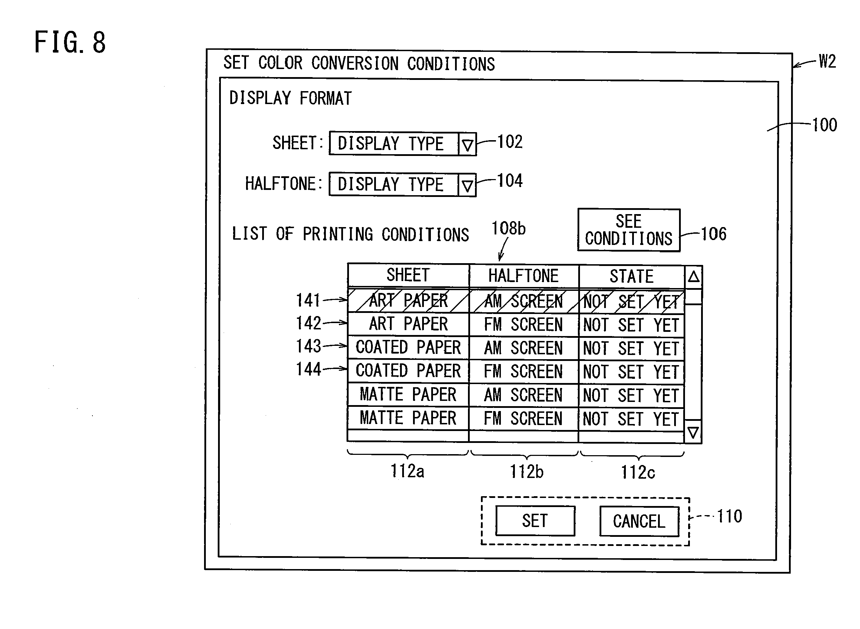

The operator selects the pull-down menu 104 and changes from "DISPLAY DETAIL" to "DISPLAY TYPE", and accordingly the list image generator 72 generates a new list image 108b (see FIG. 8) by referring to the group attribute allocated in step S2. More specifically, the list image generator 72 changes portions of the details of the small fields 112a, 112b of the list image 108a (see FIG. 7). The screen generator 70 then generates display data (including the list image 108b) for the setting screen 100, and supplies the generated image data to the display controller 44.

In response to the change in the pull-down menu 104, the display format of the list image 108a is changed immediately. FIG. 8 shows a setting screen 100 that is displayed at this time, which includes, in a center portion thereof, a list image 108b, which is displayed instead of the list image 108a shown in FIG. 7. As shown in FIG. 8, the group attributes "ART PAPER" and "AM SCREEN", which are represented collectively by the first line 131 and the third line 133 of FIG. 7, are newly displayed in a first line 141, and the group attributes "ART PAPER" and "FM SCREEN", which correspond to the second line 132 of FIG. 7, are newly displayed in a fourth line 142. The group attributes "COATED PAPER" and "AM SCREEN", which are represented collectively by the fourth line 134 and the sixth line 136 of FIG. 7, are newly displayed in a third line 143, and the group attributes "COATED PAPER" and "FM SCREEN", which correspond to the fifth line 135 of FIG. 7, are newly displayed in a fourth line 144.

In this manner, the display format of the list image 108 can be changed in response to an operator's actions on the pull-down menus 102, 104. The operator can thus select whether a plurality of printing conditions are to be displayed in units of printing conditions (the list image 108 shown in FIG. 6) or in units of groups (the list image 108a shown in FIG. 7).

In step S4, the printing condition setter 56 determines whether or not an instruction has been made to finalize the setting change. More specifically, the printing condition setter 56 determines whether or not the operator has clicked on the button group 110 (the "SETTING" button) in the setting screen 100 (see FIGS. 6 through 8). If the printing condition setter 56 determines that an instruction has not been made to finalize the setting change, then in step S5, the printing condition setter 56 determines whether or not an instruction has been made to change color conversion conditions. More specifically, the printing condition setter 56 determines whether or not the operator has clicked on the "SEE CONDITIONS" button 106 in the setting screen 100 (see FIGS. 6 through 8).

If the operator clicks on the "SEE CONDITIONS" button 106 in the setting screen 100 shown in FIG. 8, the setting instructor 78 issues an instruction to set desired color conversion conditions for the printing conditions for each of the groups. For example, it is assumed that color conversion condition items, such as a type of device link profile, are entered for the group in the first line 141 ("ART PAPER" and "AM SCREEN"), as well as for the group in the fourth line 144 ("COATED PAPER" and "FM SCREEN"). Alternatively, the setting instructor 78 may issue an instruction to cancel color conversion conditions that have already been set for the printing conditions for each of the groups.

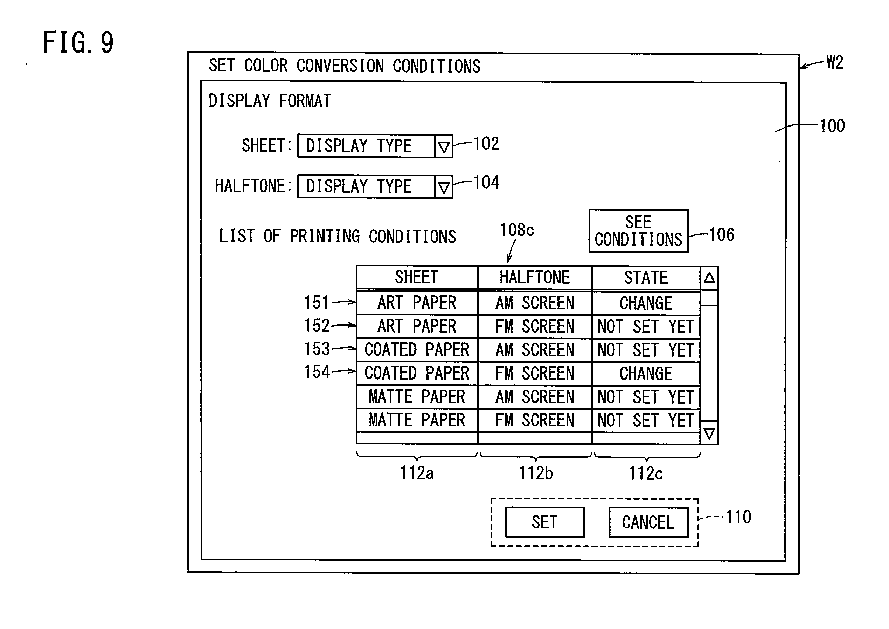

In step S6, the display controller 44 updates the list image 108b (see FIG. 8) in order to display a list image 108c (see FIG. 9), which represents the present settings on the display unit 46. Prior to updating the list image 108b, the list image generator 72 generates a new list image 108c, which reflects the instruction entered in step S5. More specifically, the list image generator 72 changes a portion of the details of the small field 112c of the list image 108b (see FIG. 8). Then, the screen generator 70 generates display data (including the list image 108c) for the setting screen 100, and supplies the generated display data to the display controller 44.

The setting screen 100 shown in FIG. 9, which is displayed at this time, includes, in a center portion thereof, a list image 108c, which is displayed instead of the list image 108b shown in FIG. 8. As shown in FIG. 9, the state "CHANGE" is newly displayed in certain areas, i.e., in a first line 151 and a fourth line 154 of the small field 112c.

Thereafter, in step S4, the printing condition setter 56 determines whether or not the operator has clicked on the button group 110 (the "SETTING" button) in the setting screen 100. If the printing condition setter 56 determines that an instruction has been made to finalize the setting change, control then proceeds to step S7.

In step S7, the condition setter 68 sets or cancels color conversion condition items for printing conditions that have been instructed to change. For example, if an instruction is given on the list image 108 (see FIG. 6), then the condition setter 68 sets or cancels details of color conversion condition items in units of printing conditions. On the other hand, if an instruction is given on the list image 108c (see FIG. 9), then the condition setter 68 sets or cancels details of color conversion condition items in units of groups. The RIP apparatus 20 sends the changed printing conditions via the communication I/F 42 to the server apparatus 16. The printing conditions, which have been sent in this manner, are updated and registered in the printing condition database, which is established in the server apparatus 16.

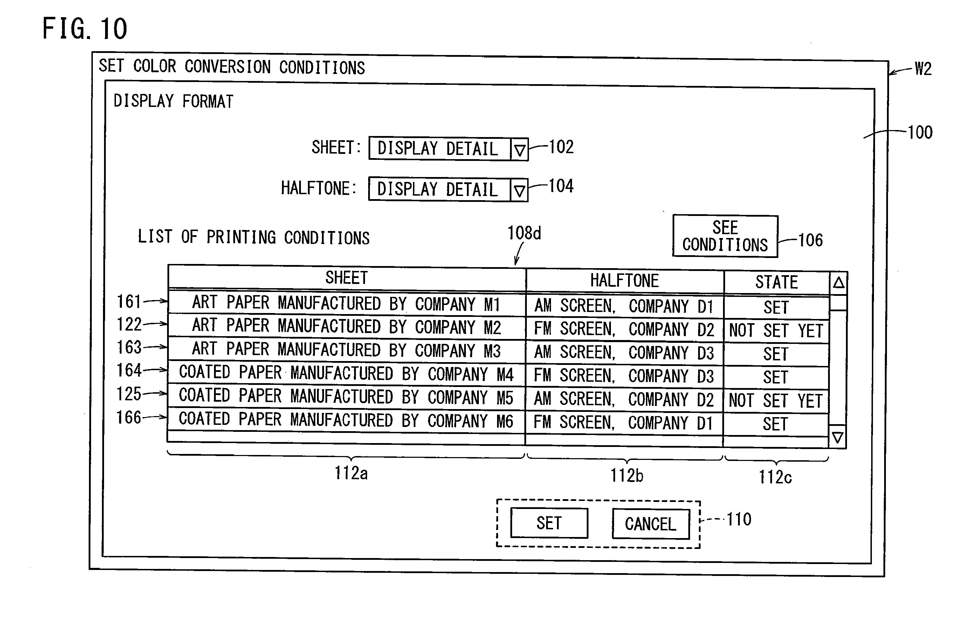

As shown in FIG. 10, if the window W2 is displayed again, the state "SET" is newly displayed in place of "NOT SET YET" (see FIG. 6) in a first line 161, a third line 163, a fourth line 164, and a sixth line 166 of the list image 108d. Therefore, the operator is able to set or cancel the same color conversion conditions altogether for a plurality of types of sheets 38.

As described above, the printing condition setting apparatus according to the present invention includes the group attribute allocator 66 that groups details of medium condition items, which are condition items concerning mediums (printing plates 26, sheet 38) for transferring color materials, according to predetermined collection rules, and allocates group attributes to printing conditions. The printing condition setting apparatus further includes the condition setter 68 that sets or cancels altogether color conversion condition items, which are condition items concerning color conversion conditions for a printing process, with respect to a plurality of printing conditions having group attributes allocated by the group attribute allocator 66. Consequently, it is possible to efficiently associate medium condition items and color conversion condition items with each other, thereby allowing color conversion conditions to easily be set with a vast number of printing conditions.

According to the above grouping process, group attributes are classified according to conformity thereof with details of condition items (i.e., whether a term such as "COATED PAPER" or the like is included therein or not). However, various other processes may be employed. For example, the "MEASURE" button 86 (see FIG. 5) is clicked on and the colorimeter 36 performs the colorimetric operation, and accordingly the color information acquirer 64 may acquire color information (L*, a*, b* values) concerning the sheet 38, and the group attribute allocator 66 may allocate group attributes based on the color information of the sheet 38.

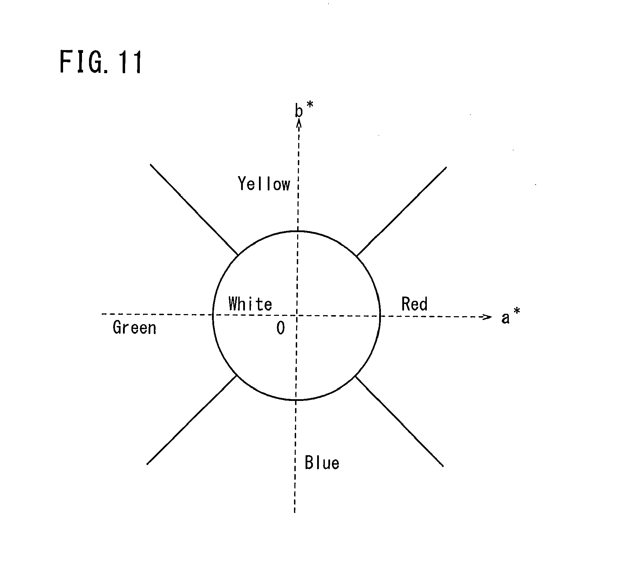

The group attribute allocator 66 classifies a color space (a*b* plane), as shown in FIG. 11, into five areas, and determines a group attribute depending on whether or not the color information belongs to one of the five areas. For example, if the color information satisfies the relationship (a*)² + (b*)² ≤ Δ², then the attribute "White" is allocated. If the color information satisfies the relationship (a*)² + (b*)² > Δ², then either one of four attributes is allocated. More specifically, if the color information satisfies the relationships (b* ≥ -a*) and (b* < a*), then the attribute "Red" is allocated. If the color information satisfies the relationships (b* ≥ a*) and (b* > -a*), then the attribute "Yellow" is allocated. If the color information satisfies the relationships (b* ≤ -a*) and (b* < a*), then the attribute "Green" is allocated. If the color information satisfies the relationships (b* ≤ a*) and (b* < -a*), then the attribute "Blue" is allocated.

Therefore, since details of medium condition items are classified based on the color information of the medium 38, color reproduction characteristics on the print 30 can further be taken into consideration. Alternatively, a new attribute "ART PAPER (White)" may be added in combination with the attribute "ART PAPER".

## Claims

1. A printing condition setting apparatus (20) for setting printing conditions representing a combination of at least two condition items with respect to a printing process for transferring color materials to an output medium (38), comprising:
a group attribute allocator (66) for grouping details of medium condition items, which are condition items concerning a medium (26, 38) for transferring the color materials, according to predetermined collection rules, and allocating group attributes to the printing conditions; and
a condition setter (68) for setting or canceling altogether color conversion condition items, which are condition items concerning color conversion conditions for the printing process, with respect to a plurality of the printing conditions having the group attributes allocated by the group attribute allocator (66).

2. The printing condition setting apparatus (20) according to claim 1, wherein the predetermined collection rules comprise rules concerning similarity of color reproduction characteristics in the printing process.

3. The printing condition setting apparatus (20) according to claim 1, wherein the medium (26, 38) for transferring the color materials comprises the output medium (38); and
the group attribute allocator (66) groups the details of the medium condition items according to a type of the output medium (38), and allocates the group attributes to the printing conditions.

4. The printing condition setting apparatus (20) according to claim 3, further comprising:
a color information acquirer (64) for acquiring color information of the output medium (38),
wherein the group attribute allocator (66) allocates the group attributes to the printing conditions based on the color information acquired by the color information acquirer (64).

5. The printing condition setting apparatus (20) according to claim 1, wherein the medium (26, 38) for transferring the color materials comprises a printing plate (26); and
the group attribute allocator (66) groups the details of the medium condition items according to a type of halftone dots formed on the printing plate (26), and allocates the group attributes to the printing conditions.

6. The printing condition setting apparatus (20) according to claim 1, wherein the color conversion condition items include at least one of a target profile, a printing profile, a device link profile, and a dot gain curve.

7. A printing condition setting method to be carried out by a printing condition setting apparatus (20) for setting printing conditions representing a combination of at least two condition items with respect to a printing process for transferring color materials to an output medium (38), comprising:
grouping details of medium condition items, which are condition items concerning a medium (26, 38) for transferring the color materials, according to predetermined collection rules, and allocating group attributes to the printing conditions; and
setting or canceling altogether color conversion condition items, which are condition items concerning color conversion conditions for the printing process, with respect to a plurality of the printing conditions having the allocated group attributes.

8. A non-transitory storage medium (54) storing therein a program for setting printing conditions representing a combination of at least two condition items with respect to a printing process for transferring color materials to an output medium (38), the program enabling a computer (20) to perform the steps of:
grouping details of medium condition items, which are condition items concerning a medium for transferring the color materials, according to predetermined collection rules, and allocating group attributes to the printing conditions; and
setting or canceling altogether color conversion condition items, which are condition items concerning color conversion conditions for the printing process, with respect to a plurality of the printing conditions having the allocated group attributes.
